# FASCICULE DE BREVET EUROPEEN

(11) **EP 3 301 838 B1**
(45) Date de publication et mention de la délivrance du brevet: **14.04.2021**
(21) Numéro de dépôt: 16191813.1
(22) Date de dépôt: 30.09.2016
(51) Int. Cl.: H04K 1/02, G01S 13/74, G01S 13/82

(54) **PROCÉDÉ ET SYSTÈME DE DETERMINATION D'UNE DISTANCE ENTRE UN OBJET PORTABLE ET UNE STATION DE BASE**
VERFAHREN UND SYSTEM ZUR BESTIMMUNG DER ENTFERNUNG ZWISCHEN EINEM TRAGBAREN OBJEKT UND EINER BASISSTATION
METHOD AND SYSTEM FOR DETERMINING A DISTANCE BETWEEN A PORTABLE OBJECT AND A BASE STATION

(43) Date de publication de la demande: 04.04.2018
(73) Titulaire: The Swatch Group Research and Development Ltd, 2074 Marin (CH)
(72) Inventeur: Casagrande, Arnaud, 2014 Bôle (CH); Velásquez, Carlos, 2000 Neuchâtel (CH); DUC, Philippe, 1580 Avenches (CH)
(74) Mandataire: ICB SA

(56) Documents cités:
- EP-B1- 2 796 988
- WO-A1-2015/152809
- US-A1- 2011 221 632
- US-A1- 2016 234 684
- US-B2- 7 119 736

## Description

### Domaine de l'invention

L'invention concerne un procédé de détermination d'une distance entre au moins un objet portable personnalisé et au moins une station de base.

L'invention concerne un système de détermination d'une distance pour la mise en œuvre du procédé de détermination d'une distance.

### Arrière-plan de l'invention

Il est courant dans le domaine sportif par exemple de définir des temps de compétiteurs sur un tracé de course au moyen d'un objet portable, qui peut être un module à transpondeur activé en permanence ou réveillé par un signal d'activation en liaison avec une station de base. Cependant il est toujours difficile de déterminer avec précision la distance séparant ledit module à transpondeur porté par un compétiteur et la station de base de manière à savoir sa position sur un tracé de course avant son arrivée.

On peut citer à ce titre la demande de brevet WO 2015/152809 A1 qui décrit un procédé et un système de détection de position. Le système de détection de position comprend au moins un module à transpondeur et une station de base. La station de base transmet un signal à code pseudo-aléatoire pour le module à transpondeur. Ce signal à code pseudo-aléatoire est retardé d'un certain nombre d'impulsions d'horloge dans le module à transpondeur, qui retransmet un signal à code pseudo-aléatoire en tenant compte du retard généré de manière à permettre dans la station de base de déterminer le temps de vol du signal à code pseudo-aléatoire entre les deux entités. Cependant il n'est pas prévu de transmettre plusieurs signaux codés en continu depuis la station de base au module à transpondeur de manière à déterminer précisément une distance entre le module à transpondeur et la station de base, et la possibilité de reconnaître facilement le module à transpondeur interrogé, ce qui constitue un inconvénient.

### Résumé de l'invention

L'invention a donc pour but de proposer un procédé de détermination d'une distance entre au moins un objet portable personnalisé et au moins une station de base pour pallier les inconvénients de l'état de la technique susmentionné, sans calcul complexe dans l'objet portable lors de la transmission de son signal réponse.

A cet effet, l'invention concerne un procédé de détermination d'une distance entre au moins un objet portable personnalisé et au moins une station de base, qui comprend les caractéristiques mentionnées dans la revendication indépendante 1.

Des étapes particulières du procédé sont mentionnées dans les revendications dépendantes 2 à 17.

Un avantage du procédé réside dans le fait qu'il est déterminé des temps de communication ou temps de vol par des signaux transmis entre la station de base et l'objet portable personnalisé. De plus, il est prévu de transmettre au moins depuis l'objet portable à la station de base un signal réponse codé brouillé ("scrambled" en terminologie anglaise). Cela permet ainsi de bien définir la réponse transmise directement de l'objet portable pour le différencier d'autres objets portables dans une zone proche de détermination. Avec ce système de détermination, il est possible de mesurer précisément la distance séparant l'objet portable de la station de base. L'objet portable peut être configuré sous la forme d'un module à transpondeur pour la communication sans fil de signaux radiofréquences.

Un avantage du procédé réside dans le fait qu'il y a une fusion de l'information de la distance entre la station de base et l'objet portable, avec la réponse à code brouillé transmise par l'objet portable. C'est équivalent à un cryptage spatial. La fusion d'information peut également permettre d'identifier l'objet portable.

Avantageusement, une première variante du procédé de détermination d'une distance est d'utiliser une communication à deux fréquences d'émission et réception de signaux en duplex complet entre la station de base et l'objet portable.

Avantageusement, une seconde variante du procédé de détermination d'une distance est d'utiliser une unique fréquence d'émission et réception en semi duplex en opérant avec une alternance entre émission et réception de séquences de signaux entre la station de base et l'objet portable.

Avantageusement, les deux variantes du procédé de détermination d'une distance permettent de travailler avec des références de fréquence peu précises (typiquement ± 40 ppm), pour autant que l'erreur de fréquence relative entre les deux oscillateurs n'entache que très faiblement l'estimation de distance effectuée.

Tout le travail de contrôle pour la détermination d'une distance de l'objet portable est effectué dans une unité de traitement de signaux numériques dans la station de base. Cela simplifie grandement la circuiterie de l'objet portable, ce qui réduit son coût et également sa consommation électrique, comme il est alimenté par une batterie de petite dimension. De plus comme le lien de communication utilisé est de type bande étroite sur deux fréquences de communication ou une seule fréquence de communication, cela simplifie également les composants radiofréquences utilisés.

Le système de détermination d'une distance utilise une technologie radiofréquence à bande relativement étroite, qui est simple avec des bandes ISM ayant une bonne sensibilité. Le système présente des antennes à bande relativement étroite, qui présentent un gain supérieur à celui des antennes d'un système UWB, ce qui rend le système de la présente invention pour la mise en œuvre du procédé de détermination d'une distance plus simple et plus économique que la technologie UWB. De plus, le système, qui utilise des bandes ISM de communication, permet une émission de signaux à des puissances élevées (10 à 20 dBm) dans la plupart des pays du monde, ce qui permet d'augmenter la portée du système de détermination de distance.

A cet effet, l'invention concerne également un système de détermination d'une distance pour la mise en œuvre du procédé de détermination d'une distance, qui comprend les caractéristiques mentionnées dans la revendication indépendante 18.

Des formes particulières du système de détermination d'une distance sont définies dans les revendications dépendantes 19 à 24.

### Brève description des dessins

Les buts, avantages et caractéristiques du procédé et du système de détermination d'une distance entre un objet portable personnalisé et une station de base, apparaîtront mieux dans la description suivante par les dessins sur lesquels :
la figure 1 représente une première forme d'exécution d'un système de détermination d'une distance pour la mise en œuvre du procédé de détermination d'une distance selon l'invention,
la figure 2 représente différents signaux émis et reçus de la station de base et de l'objet portable du système de détermination d'une distance de la figure 1 pour le procédé de détermination d'une distance selon l'invention,
la figure 3 représente une seconde forme d'exécution d'un système de détermination d'une distance pour la mise en œuvre du procédé de détermination d'une distance selon l'invention,
la figure 4 représente différents signaux émis et reçus de la station de base et de l'objet portable du système de détermination d'une distance de la figure 3 pour le procédé de détermination d'une distance selon l'invention,
la figure 5 représente des séquences de transmission et de réception de signaux, qui alternent dans le temps, entre la station de base et l'objet portable du système de détermination d'une distance de la figure 3 pour le procédé de détermination d'une distance selon l'invention, et
la figure 6 représente dans un cas particulier de modulation, la fréquence dans le temps des signaux codés transmis et retransmis de la station de base à l'objet portable et de l'objet portable à la station de base au cours de la phase de réponse du module à transpondeur, et en fonction de la distance entre l'objet portable et la station de base pour le procédé de détermination d'une distance selon l'invention.

### Description détaillée de l'invention

Dans la description suivante, tous les composants du système de détermination d'une distance pour la mise en œuvre du procédé de détermination d'une distance, qui sont bien connus d'un homme du métier dans ce domaine technique, ne sont décrits que de manière simplifiée. De préférence, il est fait référence à la détermination de distance dans le domaine du sport pour déterminer précisément la distance d'une personne, tel qu'un sportif sur une zone d'activité portant l'objet portable par rapport à la position d'une station de base.

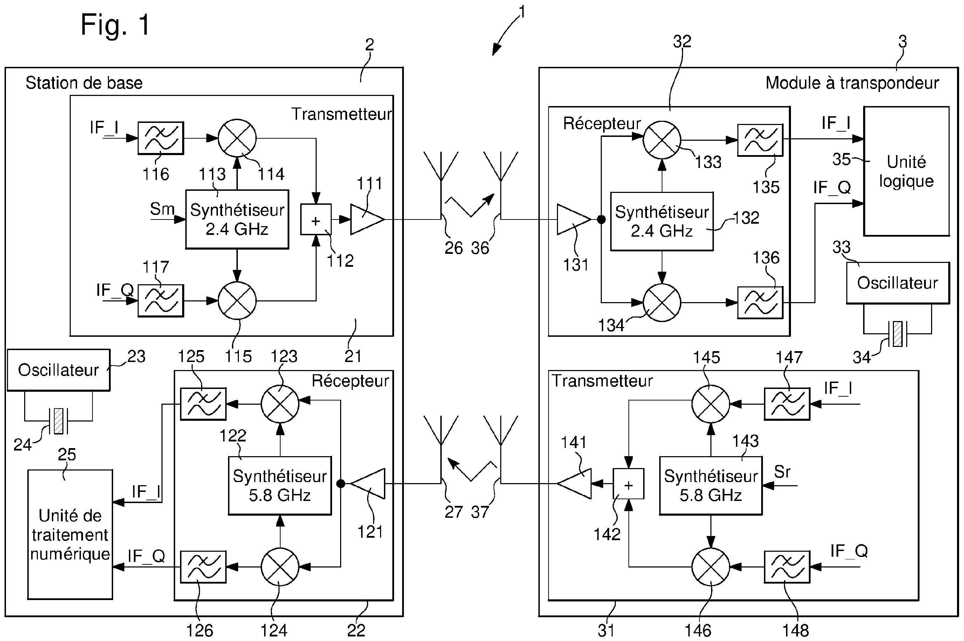

La figure 1 représente une première forme d'exécution du système de détermination d'une distance 1 entre un objet portable et une station de base pour la mise en œuvre du procédé de détermination d'une distance. Dans cette première forme d'exécution du système de détermination d'une distance 1, la station de base 2 est utilisée sur une zone d'activité pour effectuer une communication sans fil notamment par des signaux radiofréquences avec un objet portable 3 porté par un dispositif, qui peut être par exemple une personne, un animal ou un autre objet mobile. L'objet portable 3 est de préférence un module à transpondeur, qui peut être porté sur une partie du corps de la personne sur la zone d'activité sportive, par exemple dans un dossard, si la personne est un compétiteur. La station de base peut être disposée à une position de référence de la zone d'activité pour déterminer la distance par rapport à une position intermédiaire ou à une position d'arrivée d'un tracé d'une compétition sportive.

Selon le procédé de détermination d'une distance, il doit être détecté assez précisément la distance séparant l'objet portable, tel que le module à transpondeur 3, de la station de base 2. Dès l'activation du module à transpondeur 3, une transmission et réception en continu de signaux radiofréquences de commandes ou de données, qui peuvent être codés, s'effectuent depuis la station de base 2 vers le module à transpondeur 3 et inversement. Une fusion de l'information de distance dans un signal réponse codé du module à transpondeur 3 transmise à la station de base 2 est effectuée. Un traitement numérique des signaux est principalement réalisé dans la station de base 2 pour simplifier le travail du module à transpondeur 3. Il est ainsi déterminé précisément dans la station de base 2, les temps de vol des signaux entre la station de base et le module à transpondeur et inversement, et de ce fait la distance les séparant.

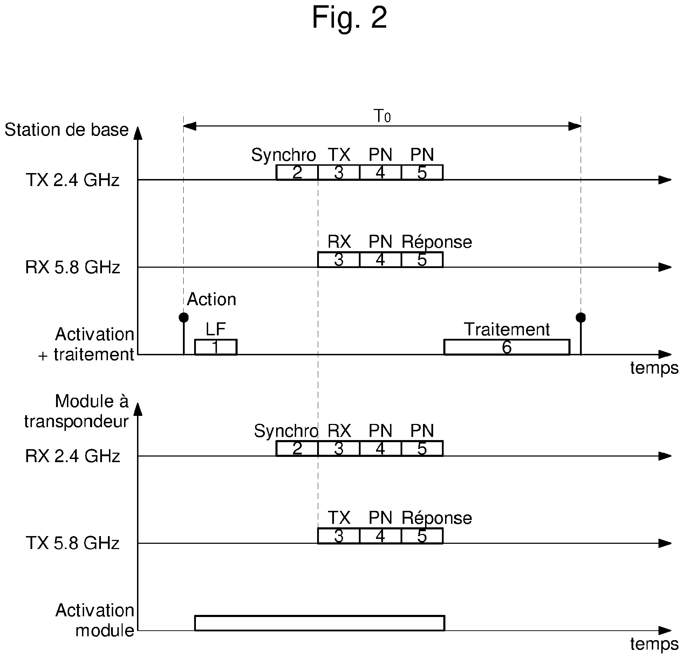

Selon le procédé de détermination d'une distance décrit en détail en référence à la figure 2 ci-dessous, il doit au moins y avoir une transmission d'un signal de base à code de brassage ou à modulation d'une séquence pseudo-aléatoire de bruit depuis la station de base 2 au module à transpondeur 3. Le module à transpondeur démodule ce signal et le retransmet sur une même fréquence porteuse ou une fréquence porteuse différente du signal reçu. Par la suite et en continu la station de base 2 transmet un autre signal à modulation pseudo-aléatoire de bruit pour que le module à transpondeur 3 retransmette ce signal en y ajoutant une modulation supplémentaire. Cela permet de transmettre des informations depuis le module à transpondeur 3 vers la station de base 2. Il est ainsi possible à la station de base 2 de mesurer précisément la distance la séparant du module à transpondeur 3 et de recevoir des données propres à ce module à transpondeur 3.

La station de base 2 comprend notamment un transmetteur 21, un récepteur 22 et au moins une unité de traitement numérique des signaux 25, qui est reliée au transmetteur 21 et au récepteur 22. L'unité de traitement peut comprendre un microprocesseur cadencé par un oscillateur local 23. Cet oscillateur local 23 est de préférence un oscillateur à résonateur à quartz 24, qui peut fournir un signal oscillant de référence par exemple à une fréquence de l'ordre de 26 MHz.

Suite à une commande d'activation du module à transpondeur 3, le transmetteur 21 est capable de transmettre un signal radiofréquence de commandes ou de données à une première fréquence porteuse par une première antenne 26 à destination d'une première antenne de réception 36 du module à transpondeur 3 expliqué en détail ci-après. La première haute fréquence porteuse dans cette première forme d'exécution peut être par exemple à une fréquence ISM à 2.4 GHz. Le récepteur 22 est capable de recevoir par une seconde antenne de réception 27 un signal radiofréquence à une seconde fréquence porteuse provenant du module à transpondeur 3 interrogé. Cette seconde haute fréquence porteuse peut être par exemple à une fréquence ISM à 5.8 GHz.

Dans une phase initiale suite à la commande d'activation effectuée dans la station de base 2, il peut tout d'abord être transmis par la première antenne 26 du transmetteur 21, un signal d'activation à basse fréquence LF pour réveiller le module à transpondeur 3 dans une zone d'activité. Toutefois, il peut aussi être envisagé de réveiller le module à transpondeur 3 à haute fréquence, par exemple à 2.4 GHz, ou par d'autres signaux à ultrasons ou autres. Le réveil du module à transpondeur 3 peut aussi être effectué de manière cadencée à intervalles définis selon des bases de temps, qui peuvent être embarquées à la fois dans le module à transpondeur 3 et dans la station de base 2. Les différentes étapes du procédé, qui suivent cette phase initiale, sont expliquées plus en détail par la suite. Ledit module à transpondeur peut encore être réveillé ou activé par une action du porteur dudit module à transpondeur 3

Le transmetteur 21 de la station de base 2 comprend un premier synthétiseur de fréquence 113 recevant un signal de référence de l'oscillateur local 23. Le premier synthétiseur de fréquence 113 est susceptible de fournir des signaux oscillant à la première fréquence à un premier mélangeur 114 et à un second mélangeur 115. Le premier mélangeur 114 reçoit depuis l'unité de traitement numérique 25 au moins un signal intermédiaire en phase IF_I, qui est filtré dans un filtre passe-bas 116 pour convertir en fréquence vers le haut ce signal intermédiaire par un premier signal oscillant du synthétiseur de fréquence. Le second mélangeur 115 reçoit depuis l'unité de traitement numérique 25 au moins un signal intermédiaire en quadrature IF_Q, qui est filtré dans un filtre passe-bas 117 pour convertir en fréquence vers le haut ce signal intermédiaire par un second signal oscillant du synthétiseur de fréquence 113. Le signal de sortie à la première fréquence du premier mélangeur 114 et le signal de sortie à la première fréquence du second mélangeur 115 sont additionnés dans un additionneur 112 du transmetteur 21. Un amplificateur de sortie 111 est relié en sortie de l'additionneur 112 pour amplifier le signal radiofréquence de sortie à transmettre par la première antenne 26.

Il est à noter que le premier signal oscillant fourni par le premier synthétiseur de fréquence 113 du transmetteur 21 est un signal oscillant en phase, alors que le second signal oscillant est un signal oscillant en quadrature. Ceci est prévu pour un mélange respectif avec le signal intermédiaire filtré en phase IF_I et le signal intermédiaire filtré en quadrature IF_Q.

Chaque signal intermédiaire IF_I et IF_Q, comme expliqué ci-après en référence notamment à la figure 2, peut comprendre une modulation d'un code de synchronisation à transmettre par la première antenne 26. Il peut s'agir d'une modulation de fréquence FSK ou GFSK ou autre pour ce code. Cependant, il peut aussi être envisagé de moduler la fréquence de chaque signal oscillant fourni par le premier synthétiseur 113 par un signal de modulation Sm transmis par l'unité de traitement numérique 25. Une modulation de phase PSK ou BPSK peut aussi être envisagée.

Il est à noter qu'il peut être prévu dans la station de base 2, un générateur pseudo-aléatoire de bruit comme décrit dans le brevet EP 2 796 988 B1 en référence à la figure 2 et paragraphes 33 à 37. Ce générateur peut être cadencé par l'oscillateur 23 afin de générer un code pseudo-aléatoire de bruit en liaison avec l'unité de traitement 25.

Le récepteur 22 de la station de base 2 comprend un second synthétiseur de fréquence 122 pour recevoir un signal de référence de l'oscillateur local 23. Une seconde antenne de réception 27 est prévue pour recevoir au moins un signal radiofréquence provenant du module à transpondeur 3 interrogé par la station de base 2. Cette seconde antenne 27 est liée à un amplificateur à faible bruit d'entrée 121 du récepteur 22 pour amplifier et filtrer le ou les signaux reçus. Un premier mélangeur 123 du récepteur 22 est prévu pour convertir en fréquence le signal radiofréquence amplifié et filtré par un signal oscillant en phase du second synthétiseur de fréquence 122, afin de fournir un signal intermédiaire en phase IF_I, qui est filtré par un filtre passe-bas 125. Un second mélangeur 124 du récepteur 22 est prévu pour convertir en fréquence le signal radiofréquence amplifié et filtré par un signal oscillant en quadrature du second synthétiseur de fréquence 122, afin de fournir un signal intermédiaire en quadrature IF_Q, qui est filtré par un autre filtre passe-bas 126.

Les signaux intermédiaires en phase IF_I et en quadrature IF_Q fournis par le récepteur 22 sont reçus par l'unité de traitement numérique 25. Dans l'unité de traitement numérique, il y a tout d'abord un convertisseur analogique numérique ADC non représenté pour convertir les signaux intermédiaires en signaux numériques intermédiaires à traiter dans l'unité de traitement 25. L'unité de traitement 25 peut comprendre encore, non représentés, un détecteur d'enveloppe des signaux numériques intermédiaires, au moins une unité de mémorisation, telle qu'une mémoire non volatile à plusieurs registres, et un convertisseur numérique-analogique pour convertir des signaux numériques à transmettre. L'unité de traitement 25 est cadencée par un signal de cadencement fourni par l'oscillateur local 23, qui peut être à une fréquence de l'ordre de 26 MHz ou à une fréquence divisée par un ensemble de diviseurs par deux.

Le module à transpondeur 3 comprend des composants semblables à ceux décrits pour la station de base 2 excepté l'unité de traitement numérique. Le module à transpondeur 3 comprend notamment un récepteur 32 pour recevoir des signaux radiofréquences par une première antenne 36 à une première fréquence, un transmetteur 31 pour transmettre par une seconde antenne 37 des signaux radiofréquences à une seconde fréquence à destination de la station de base 2, et au moins une unité logique 35. Le module à transpondeur comprend encore un oscillateur local 33, qui peut être également un oscillateur à résonateur à quartz 34, et qui fonctionne de la même manière que l'oscillateur de la station de base 2. Cet oscillateur local 33 est prévu pour cadencer toutes les opérations dans le module à transpondeur 3.

Il est à noter que dans le module à transpondeur 3, il n'est pas prévu de traitement numérique des signaux notamment pour déterminer la distance précisément. Par contre, il est prévu d'effectuer un décodage simple des signaux de synchronisation captés dans l'unité logique 35. Ce code de synchronisation permet au module à transpondeur 3 de déterminer le début de la phase de réponse au cours de laquelle les données propres du module à transpondeur 3 sont sur-modulées sur le signal retransmis.

Le récepteur 32 du module à transpondeur 3 comprend donc un premier synthétiseur de fréquence 132 recevant un signal de référence de l'oscillateur local 33. La première antenne de réception 36 est prévue pour recevoir au moins un signal radiofréquence par exemple modulé en fréquence provenant de la station de base 2. Cette première antenne de réception 36 est liée à un amplificateur à faible bruit d'entrée 131 du récepteur 32 pour amplifier et filtrer le ou les signaux reçus. Un premier mélangeur 133 du récepteur 32 est prévu pour convertir en fréquence le signal radiofréquence amplifié et filtré par un signal oscillant en phase du premier synthétiseur de fréquence 132, afin de fournir un signal intermédiaire en phase IF_I, qui est filtré par un filtre passe-bas 135. Un second mélangeur 134 du récepteur 32 est prévu pour convertir en fréquence le signal radiofréquence amplifié et filtré par un signal oscillant en quadrature du premier synthétiseur de fréquence 132, afin de fournir un signal intermédiaire en quadrature IF_Q, qui est filtré par un autre filtre passe-bas 136.

Les signaux intermédiaires en phase IF_I et en quadrature IF_Q fournis par le récepteur 32 sont reçus par l'unité logique 35, qui comprend non représenté un processeur ou une machine d'états. L'unité logique peut aussi comprendre, non représentés, un convertisseur analogique numérique ADC pour convertir les signaux intermédiaires en signaux numériques intermédiaires, un détecteur d'enveloppe des signaux numériques intermédiaires, un élément à retard, un générateur de modulation en fréquence de signaux, et au moins une unité de mémorisation, telle qu'une mémoire non volatile. L'unité logique 35 comprend encore un convertisseur numérique-analogique pour convertir des signaux numériques à transmettre à la station de base 2. L'unité logique 35 est cadencée par un signal de cadencement fourni par l'oscillateur local 33 à résonateur à quartz 34. La fréquence de l'oscillateur 33 peut être de l'ordre de 26 MHz ou à une fréquence divisée par un ensemble de diviseurs par deux.

Le traitement numérique est simplifié dans le module à transpondeur étant donné que tout le traitement numérique de détermination de temps de vol des signaux est effectué principalement dans l'unité de traitement 25 de la station de base 2. Le module à transpondeur 3 n'opère qu'un traitement simplifié des signaux, afin de lui permettre de synchroniser la phase de réponse par sur-modulation.

Le transmetteur 31 du module à transpondeur 3 comprend un second synthétiseur de fréquence 143 pour recevoir tout d'abord un signal de référence de l'oscillateur local 33. Le second synthétiseur de fréquence 143 est susceptible de fournir des signaux oscillants à une seconde fréquence à un premier mélangeur 145 et à un second mélangeur 146. Le premier mélangeur 145 reçoit depuis l'unité logique 35 au moins un signal intermédiaire en phase IF_I, qui est filtré dans un filtre passe-bas 147 pour convertir en fréquence vers le haut ce signal intermédiaire par un premier signal oscillant en phase du second synthétiseur de fréquence 143. Le second mélangeur 146 reçoit depuis l'unité logique 35 au moins un signal intermédiaire en quadrature IF_Q, qui est filtré dans un filtre passe-bas 148 pour convertir en fréquence vers le haut ce signal intermédiaire par un second signal oscillant en quadrature du second synthétiseur de fréquence 143. Le signal de sortie à une seconde fréquence du premier mélangeur 145 et le signal de sortie à une seconde fréquence du second mélangeur 146 sont additionnés dans un additionneur 142 du transmetteur 31. Un amplificateur de sortie 141 est relié en sortie de l'additionneur 142 pour amplifier le signal radiofréquence de sortie à transmettre par une seconde antenne 37 du module à transpondeur 3.

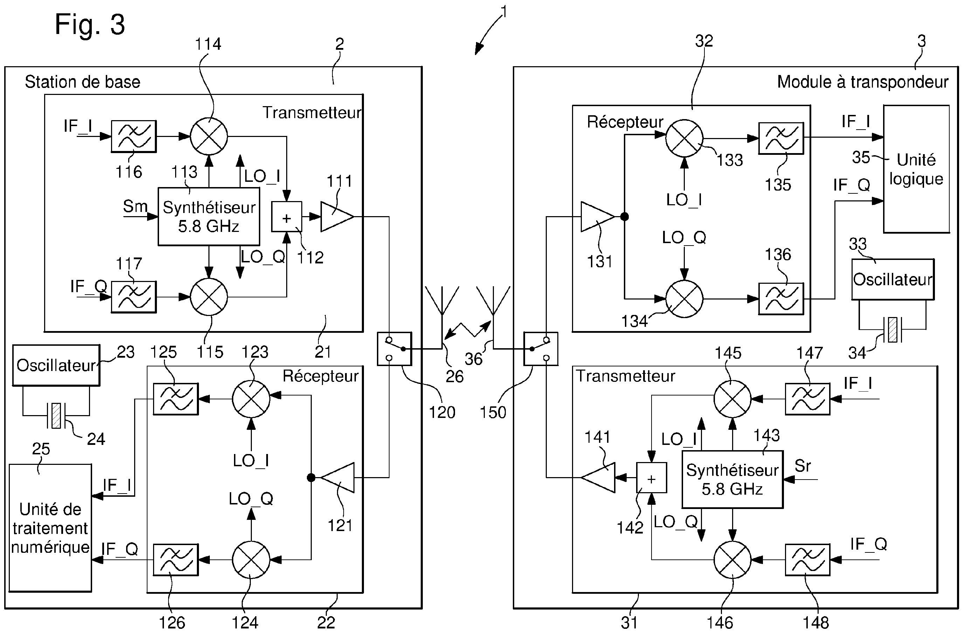

Il est à noter que l'utilisation dans l'unité 35 d'une conversion analogique-numérique suivie d'un filtrage numérique, puis d'une conversion numérique-analogique permet d'éviter la réémission hors bande d'un perturbateur éventuel. En effet, toute fréquence trop élevée, présente sur les signaux IF_I, IF_Q en sortie du bloc 32 des figures 1 et 3, sera automatiquement repliée en bande filtrée avant retransmission.

Il est à noter tout d'abord que l'oscillateur local 23 à résonateur à quartz 24 de la station de base 2 est similaire à l'oscillateur local 33 à résonateur à quartz 34 du module à transpondeur 3. Donc la fréquence d'oscillation est sensiblement similaire à ± 40 ppm. Cela peut permettre d'avoir une bonne synchronisation de traitement dans la station de base 2 et dans le module à transpondeur 3. Selon la première variante de réalisation, il peut être prévu une phase du procédé pour ajuster un des oscillateurs par rapport à l'autre oscillateur comme expliqué ci-après en référence à la figure 2.

Il est à noter que pour chaque variante du système de détermination de distance, plusieurs antennes commutées sont également imaginables, permettant ainsi, au cours de plusieurs phases successives d'opération du système sur différentes antennes, l'utilisation d'une topologie à diversité d'antennes bien connue de l'homme de métier.

Il est encore à noter qu'il peut être prévu un seul synthétiseur de fréquence pour la génération des signaux oscillants aux deux fréquences porteuses d'émission et de réception de signaux. De plus, la modulation des données ou commandes peut être une modulation FSK, GFSK, PSK, QPSK ou OQPSK sans limitation pour pouvoir effectuer la mesure de distance.

Pour la transmission d'un code réponse en fin du procédé de détermination d'une distance depuis le module à transpondeur, une commande de modulation à brouillage Sr peut être transmise depuis l'unité logique 35 au synthétiseur de fréquence 143. Cependant il peut aussi être imaginé une modulation directement pour les signaux intermédiaires IF_I et IF_Q fournis aux deux mélangeurs 145, 146 du second synthétiseur de fréquence 143 du transmetteur 31.

En référence à la figure 2, il est décrit maintenant le procédé de détermination d'une distance entre une station de base 2 et un module à transpondeur personnalisé 3. Selon la première forme d'exécution du système de détermination d'une distance décrit ci-dessus, il doit au moins être effectué, après l'activation du module à transpondeur, une transmission d'un signal de synchronisation depuis la station de base 2 à destination du module à transpondeur 3. Le module à transpondeur 3 activé reçoit ce premier signal de synchronisation de la station de base 2 pour démoduler ledit signal et synchroniser sa phase de réponse. L'unité de traitement de la station de base 2 est capable suite à l'échange des différents signaux avec le module à transpondeur de déterminer précisément les temps de vol des signaux entre les deux entités, et donc la distance réelle les séparant.

Il est à noter que le transmetteur du module à transpondeur 3 peut être mis en fonction suite à la réception du premier signal de synchronisation de la station de base 2. Cependant il peut aussi être envisagé que l'activation du transmetteur peut être effectuée par une action du porteur du module à transpondeur 3 ou suite à une action déterminée, qui peut être programmée ou suite à une détection de mouvement.

Principalement selon la première forme d'exécution du système de détermination d'une distance pour la mise en œuvre du procédé de détermination d'une distance, le module à transpondeur peut être activé directement par l'action d'un bouton ou d'une touche sur le module à transpondeur. Le module à transpondeur transmet un signal d'interrogation à modulation, par exemple FSK ou PSK à une seconde fréquence avec un débit de données par exemple de 50 kbits/s/s à la station de base pour débuter la procédé de détermination d'une distance. Cette seconde fréquence peut être choisie à 5.8 GHz. Cependant comme montré à la figure 2, une activation du module à transpondeur 3 peut être effectuée par la transmission d'un signal à basse fréquence LF de réveil 1 depuis la station de base 2 selon une première étape ou phase du procédé. Cependant, le réveil du module à transpondeur peut aussi être effectué par une action manuelle sur un bouton du module ou par synchronisation temporelle avec la station de base. Suite au réveil du module à transpondeur, la station de base transmet après un laps de temps déterminé un premier signal de synchronisation 2 à une première haute fréquence du transmetteur à destination du récepteur du module à transpondeur selon une seconde étape ou phase du procédé. La première haute fréquence du transmetteur peut être choisie à 2.4 GHz.

Le premier signal de synchronisation 2 transmis par la station de base pour le module à transpondeur, est un signal de base codé à modulation par exemple FSK ou GFSK. Le module à transpondeur reçoit ce signal de synchronisation afin de le démoduler et de synchroniser sa phase de réponse. Dès cet instant, le module à transpondeur met en fonction son transmetteur pour une transmission de signaux à une seconde haute fréquence de l'ordre de 5.8 GHz.

Selon une troisième étape ou phase du procédé, le transmetteur de la station de base transmet par la première antenne un signal à fréquence porteuse uniquement TX 3, qui est à une première fréquence par exemple à 2.4 GHz. Ce signal à fréquence porteuse TX 3 est reçu par le récepteur du module à transpondeur, qui agit comme un dispositif de transfert et changement de fréquence du signal à fréquence porteuse reçu RX 3 ("transverter" en terminologie anglaise). Dès réception de ce signal à fréquence porteuse RX 3, une conversion à une seconde fréquence est opérée directement dans le module à transpondeur pour la transmission d'un signal à fréquence porteuse TX 3 de la clé, qui est à une seconde fréquence par exemple à 5.8 GHz. Ce signal à seconde fréquence porteuse TX 3 est reçu RX 3 par la station de base. Ce signal à seconde fréquence porteuse reçu RX 3 est converti dans la station de base afin d'être stocké dans un premier registre de la mémoire non volatile.

La transmission et la réception des signaux sont effectuées en parallèle et en continu dans la station de base et dans le module à transpondeur. Cette troisième étape du procédé est utile pour corriger l'écart de fréquence des oscillateurs à quartz de la station de base et du module à transpondeur.

Selon une quatrième étape ou phase du procédé, le transmetteur de la station de base transmet directement après le signal à fréquence porteuse de la troisième étape, un signal codé à modulation par exemple PSK ou FSK, qui est un signal pseudo-aléatoire de bruit PN 4 ("Pseudo-random-Noise" en terminologie anglaise). Ce signal PN 4 est à haut débit par exemple à 125 Mbits/s et filtré pour respecter les normes de la bande fréquentielle utilisée. Le module à transpondeur reçoit ce signal PN 4 à la première haute fréquence de 2.4 GHz, afin de retransmettre ce signal PN 4 converti à la seconde haute fréquence de 5.8 GHz pour la station de base. Un décalage temporel peut être ajouté lors de la transmission du signal codé du module à transpondeur.

La transmission et la réception du signal PN 4 sont effectuées en parallèle dans la station de base et dans le module à transpondeur. Une fois réceptionné le signal PN 4 du module à transpondeur, la station de base convertit en fréquence ce signal et le stocke dans un second registre de la mémoire non volatile.

Selon une cinquième étape ou phase du procédé, le transmetteur de la station de base transmet directement et à nouveau le signal PN transmis à la quatrième étape, qui est un signal codé à modulation par exemple PSK ou FSK, tel qu'un signal pseudo-aléatoire de bruit PN 5. Ce signal PN 5 est également à haut débit par exemple à 125 Mbits/s et filtré pour respecter les normes de la bande fréquentielle utilisée. Le module à transpondeur reçoit ce signal PN 5 à la première fréquence de 2.4 GHz de manière à le retransmettre autour de 5.8 GHz et avec encore une modulation supplémentaire, par exemple à 50 kbits/s sur l'oscillateur local, ou sur le délai de retransmission, ou tout autre paramètre modulant. Le module à transpondeur génère donc un signal de réponse, qui prend en compte ce signal PN 5 et les données propres du module à transpondeur, et transmet ce signal de réponse brouillé avec la modulation, par exemple à 50 kbits/s sur la seconde fréquence à 5.8 GHz. Un décalage temporel peut être ajouté lors de la transmission du signal codé de réponse brouillé du module à transpondeur. Le signal de réponse peut également comprendre un code d'identification dudit module à transpondeur ou différents paramètres mesurés par des capteurs, tels que la température, la pression atmosphérique, la vitesse ou accélération de la personne portant ledit module à transpondeur.

La transmission et la réception des signaux PN 5 et code réponse 5 s'effectuent parallèlement dans la station de base et dans module à transpondeur. La station de base reçoit donc le signal codé de réponse de du module à transpondeur à la fréquence de 5.8 GHz et opère une conversion de fréquence afin de stocker cette information dans un troisième registre de la mémoire non volatile de l'unité de traitement.

Au terme de la cinquième étape ou phase du procédé, le module à transpondeur passe dans un mode de repos ou de veille. Dès cet instant, un traitement numérique de l'information obtenue lors des phases précédentes et stockées dans les différents registres de la mémoire est effectué dans la sixième étape ou phase du procédé. Tout le traitement de l'information captée est effectué dans l'unité de traitement numérique de la station de base.

Tout d'abord l'unité de traitement numérique de la station de base analyse l'information stockée dans le premier registre de la mémoire et détermine par une transformée de Fourier rapide FFT, l'erreur de fréquence entre les deux oscillateurs à résonateur à quartz de la station de base et du module à transpondeur. Cependant l'alignement de fréquence entre la base de temps du module à transpondeur et celle de la station de base peut s'effectuer directement dans le module à transpondeur également.

Par la suite, l'unité de traitement numérique analyse l'information stockée dans le second registre de la mémoire en la corrélant avec le code PN connu autour de la fréquence corrigée des oscillateurs lors de l'analyse du premier registre de la mémoire. Le résultat de cette corrélation donne directement les temps de vol entre la station de base et le module à transpondeur et entre le module à transpondeur et la station de base. Il est encore tenu compte des différents temps de transition du modulateur, du récepteur, du filtrage et d'autres opérations dans les composants électroniques des deux parties. Cependant ces temps de transition sont généralement calibrés après la fabrication des circuits électroniques de la station de base et du module à transpondeur et sont compensés.

Il est à noter, qu'il est encore déterminé la distance séparant le module à transpondeur de la station de base sur la base de la connaissance des temps de vol.

Finalement, l'unité de traitement numérique de la station de base analyse l'information stockée dans le troisième registre de la mémoire en la dé-corrélant avec le code PN connu, qui est décalé du temps de corrélation obtenu lors de l'analyse de l'information stockée dans le second registre de la mémoire. Cette opération finale permet de restaurer la porteuse modulée en fréquence avec le signal codé de réponse transmis par le module à transpondeur lors de la cinquième étape du procédé. Une démodulation du signal sur-modulé, par exemple FSK, ASK, PSK ou n'importe quel autre type de modulation, permet alors de récupérer le code de réponse transmis par le module à transpondeur. Le module à transpondeur est ainsi entièrement reconnu permettant de connaître également la personne le portant parmi plusieurs autres modules à transpondeur susceptibles d'être interrogés en même temps.

Il est encore à noter que la période de chaque phase du procédé lors de la transmission et réception des différents signaux peut être de l'ordre de 1 ms voire inférieure. Cette durée définit la largeur de bande de démodulation et, de ce fait, la sensibilité du système, donc la portée maximale effective. La durée totale T₀ depuis l'activation du module à transpondeur jusqu'au traitement complet de l'information stockée dans la station de base peut être de l'ordre de 10 ms.

La figure 3 représente une seconde forme d'exécution du système de détermination d'une distance 1 pour la mise en œuvre du procédé de détermination d'une distance. Même si la transmission et la réception de signaux entre la station de base 2 et le module à transpondeur 3 se fait à une seule fréquence porteuse avec alternance d'émission et réception de signaux, les différents composants de la station de base 2 et du module à transpondeur 3 sont similaires à ceux décrits en référence à la figure 1. Par simplification, il ne sera donc pas décrit à nouveau les mêmes composants décrits en référence à la figure 1, mais uniquement les parties différentes de ce système de détermination d'une distance de la figure 3.

Pour cette seconde forme d'exécution du système de détermination d'une distance 1 pour la mise en œuvre du procédé de détermination d'une distance, aussi bien l'émission que la réception sont effectuées par une même antenne et à une seule fréquence porteuse qui peut être choisie par exemple à 5.8 GHz. Une alternance entre émission et réception est effectuée dans la station de base 2 et dans le module à transpondeur 3.

Dans la station de base 2, il n'y a qu'un synthétiseur de fréquence 113 pour générer des signaux oscillant en phase et en quadrature à une fréquence voisine de 5.8 GHz pour les mélangeurs. Dans le transmetteur 21, le synthétiseur de fréquence 113 fournit un signal oscillant en phase au premier mélangeur 114 pour élever en fréquence le signal intermédiaire en phase IF_I à transmettre. Le synthétiseur de fréquence 113 fournit un signal oscillant en quadrature au second mélangeur 115 pour élever en fréquence le signal intermédiaire en quadrature IF_Q à transmettre. Les signaux de sortie des deux mélangeurs sont additionnés dans l'additionneur 112 avant d'être amplifiés par l'amplificateur 111, dont la sortie est connectée à un élément de commutation 120 relié à l'unique antenne 26 de transmission et de réception de signaux. En fonction d'une commutation de transmission commandée à l'élément de commutation 120 notamment par l'unité de traitement 25, il y a une transmission d'un signal fourni par le transmetteur par l'antenne 26 dans le mode de transmission. Cet élément de commutation 120 est de préférence un multiplexeur à deux entrées et une sortie avec une commande de commutation provenant de l'unité de traitement 25 cadencée par un signal de cadencement provenant de l'oscillateur local 23.

Le synthétiseur de fréquence 113 fournit également un signal oscillant en phase LO_I pour le premier mélangeur 123 du récepteur 22 et un signal oscillant en quadrature LO_Q pour le second mélangeur 124 du récepteur 22. En fonction d'une commutation de réception commandée à l'élément de commutation 120, le signal capté par l'antenne 26 en mode de réception est amplifié par l'amplificateur à faible bruit 121 avant d'être fourni aux premier et second mélangeurs du récepteur pour abaisser la fréquence du signal reçu et fournir les signaux intermédiaires en phase IF_I et en quadrature IF_Q filtrés et transmis à l'unité de traitement 25.

Dans le module à transpondeur 3, il n'y a également qu'un synthétiseur de fréquence 143 pour générer des signaux oscillant en phase et en quadrature à une fréquence voisine de 5.8 GHz pour les mélangeurs. Dans le transmetteur 31, le synthétiseur de fréquence 143 fournit un signal oscillant en phase au premier mélangeur 145 pour élever en fréquence le signal intermédiaire en phase IF_I à transmettre. Le synthétiseur de fréquence 143 fournit un signal oscillant en quadrature au second mélangeur 146 pour élever en fréquence le signal intermédiaire en quadrature IF_Q à transmettre. Les signaux de sortie des deux mélangeurs sont additionnés dans l'additionneur 142 avant d'être amplifiés par l'amplificateur 141, dont la sortie est connectée à un élément de commutation 150 relié à l'unique antenne 36 de transmission et de réception de signaux. En fonction d'une commutation de transmission commandée à l'élément de commutation 150 notamment par l'unité logique 35, il y a une transmission d'un signal fourni par le transmetteur 31 par l'antenne 36 dans le mode de transmission. Cet élément de commutation 150 est de préférence un multiplexeur à deux entrées et une sortie avec une commande de commutation provenant de l'unité logique 35 cadencée par un signal de cadencement provenant de l'oscillateur local 33.

Le synthétiseur de fréquence 143 fournit également un signal oscillant en phase LO_I pour le premier mélangeur 133 du récepteur 32 et un signal oscillant en quadrature LO_Q pour le second mélangeur 134 du récepteur 32. En fonction d'une commutation de réception commandée à l'élément de commutation 150, le signal capté par l'antenne 36 en mode de réception est amplifié par l'amplificateur à faible bruit 131 avant d'être fourni aux premier et second mélangeurs du récepteur 32 pour abaisser la fréquence du signal reçu et fournir les signaux intermédiaires en phase IF_I et en quadrature IF_Q filtrés et transmis à l'unité logique 35.

Il est encore à noter qu'il peut être prévu aussi deux synthétiseurs de fréquence respectivement pour le transmetteur et le récepteur de chaque entité, même si les signaux oscillants générés sont à la même fréquence porteuse pour l'émission et la réception de signaux. De plus, la modulation des données ou commandes peut être une modulation par exemple FSK, GFSK, PSK, QPSK, OQPSK ou autre sans limitation pour pouvoir effectuer la mesure de distance.

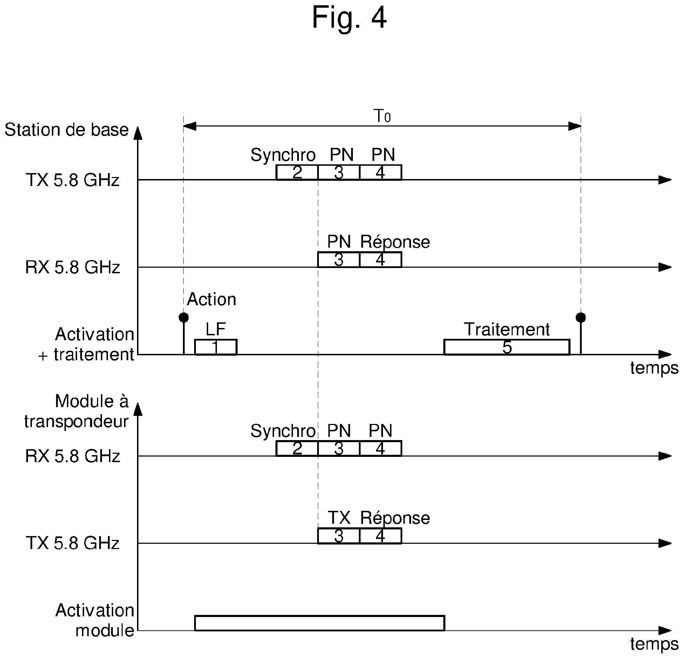

En référence à la figure 4, il est décrit maintenant le procédé de détermination d'une distance entre une station de base 2 et un module à transpondeur personnalisé 3. Selon la seconde forme d'exécution du système de détermination d'une distance décrit ci-dessus, il n'y a qu'une étape ou phase en moins du procédé de détermination d'une distance par rapport au procédé décrit ci-dessus en relation à la première forme d'exécution du système de détermination d'une distance de la figure 1. Les première, seconde, quatrième, cinquième et sixième étapes ou phases décrites précédemment sont reprises pour ce procédé de détermination d'une distance de la seconde forme d'exécution du système de détermination d'une distance. Par contre, il n'y a plus la troisième étape ou phase de transmission d'un signal à fréquence porteuse pour la détermination d'une erreur de fréquence entre les deux oscillateurs. Dans ce cas de figure avec la transmission et la réception à une seule fréquence porteuse par exemple à 5.8 GHz, l'erreur de fréquence s'annule.

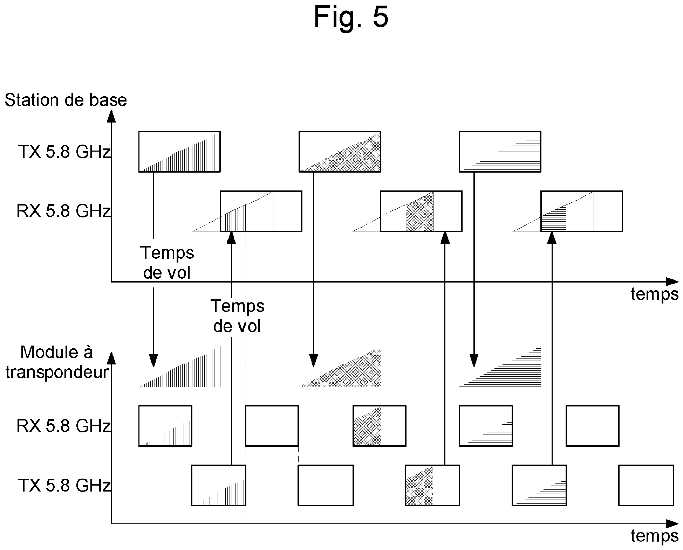

Une seule antenne dans la station de base et dans le module à transpondeur est utilisée pour la transmission et la réception des signaux codés avec une seule fréquence de communication à 5.8 GHz. Dans ces conditions, il doit y avoir une alternance entre la transmission et la réception dans le module à transpondeur et dans la station de base des signaux codés. Des fenêtres temporelles ou intervalles de temps pour la transmission et pour la réception alternent dans le temps, ce qui fait que la réception d'un signal provenant de la station de base ou du module à transpondeur peut se faire sur une portion de chaque fenêtre de réception. L'alternance entre la transmission et la réception se fait à grande vitesse, chaque 500 ns par exemple notamment dans la station de base comme on peut le remarquer symboliquement dans la figure 5.

Il peut être prévu des intervalles temporels pour la transmission et la réception des signaux codés de durée différente dans le module à transpondeur par rapport à la station de base comme montré en figure 5. Cependant, il est défini une durée de transmission égale à une durée de réception dans la station de base et dans le module à transpondeur. De ce fait, il y a un décalage temporel entre la transmission et la réception dans le module à transpondeur par rapport à la station de base.

Comme montré sur la figure 5 de manière symbolique, il est représenté des triangles pour la transmission et la réception de séquences des signaux dans le temps. On constate que, comme les fenêtres temporelles de transmission et de réception sont décalées entre la station de base et le module à transpondeur, une portion de la transmission de la station de base peut être reçue par le module à transpondeur et de même une portion de la transmission du module à transpondeur peut être reçue par la station de base. Chaque fenêtre peut être d'une durée de l'ordre de 500 ns pour la station de base, alors que pour le module à transpondeur, chaque fenêtre peut être de l'ordre de 350 ns par exemple. Par contre, le temps de vol déterminé entre le module à transpondeur et la station de base est de quelques ns.

Il est encore à noter que pour obtenir des longues séquences se chevauchant suffisamment entre une séquence transmise et une séquence reçue, le module à transpondeur doit fournir un retard de signaux internes défini et bien connu. Il est aussi à noter que les séquences de transmission et de réception du module à transpondeur et de la station de base doivent être synchronisées ou doivent présenter une fréquence différente pour éviter une désynchronisation parasite. La station de base et le module à transpondeur sont dans des modes de transmission et de réception en même temps comme visible en figure 5.

Même si uniquement une portion du signal est reçue par exemple par la station de base pour l'analyse, la corrélation va reconnaître facilement par exemple les temps de vol. La perte d'une partie du signal par chevauchement des intervalles émission/réception impacte uniquement sur la sensibilité, c'est-à-dire la portée du système. 70% de signal perdu diminue la sensibilité d'environ 10 dB.

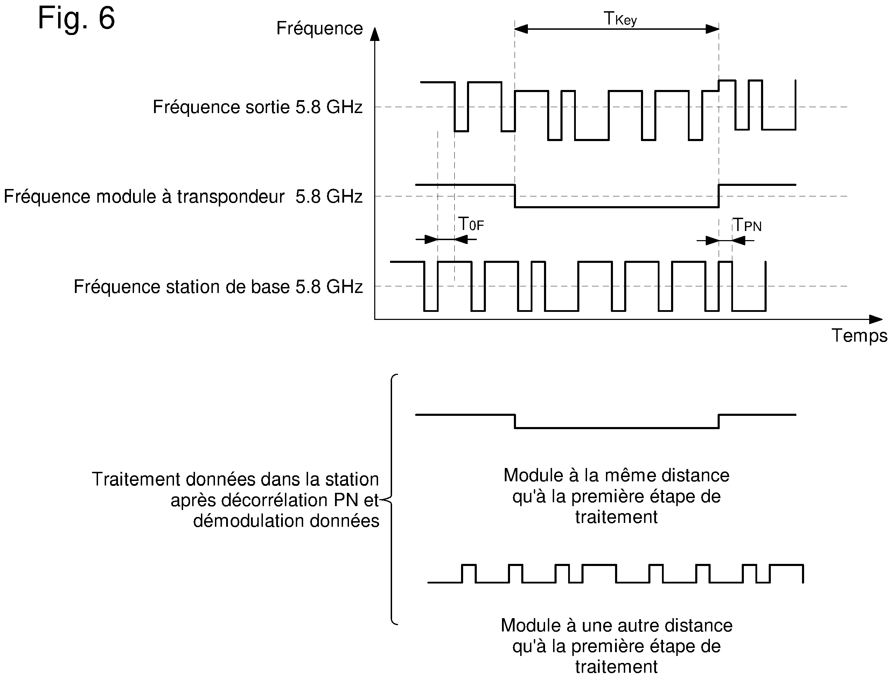

L'opération de sur-modulation par le module à transpondeur, pour transmettre son message propre, est illustrée à la figure 6 dans le cas d'une sur-modulation en fréquence sur un signal PN également modulé en fréquence. On y remarque la variation de fréquence du signal codé brouillé transmis par le module à transpondeur sur la base du code PN reçu par la station de base avec un écart temporel T_{OF}, qui est le temps de vol entre le module à transpondeur et la station de base. Le premier signal depuis le haut du graphe de la fréquence par rapport au temps représente le signal codé de réponse du module à transpondeur. Dans cet exemple, ce signal de réponse combine le signal codé PN à 13 Mbits/s reçu et converti à 5.8 GHz avec une modulation FSK à 1 Mbits/s sur l'oscillateur local pour donner un signal codé de réponse brouillé. On peut visionner sur ce premier signal la variation fréquentielle du signal de réponse du module à transpondeur pour définir un bit à l'état "1" suivi par un bit à l'état "0" et suivi encore par bit à l'état "1" à 1 Mbits/s sur le signal PN converti. Le second signal en dessous représente uniquement le changement de bit de donnée à 1 Mbits/s, alors que le troisième signal est le signal reçu par la station de base décalé dans le temps de la durée T_{OF}. La durée T_{Key} de chaque bit est de l'ordre de 1 µs pour un débit à 1 Mbits/s sur l'oscillateur local, alors que la durée T_{PN} d'une variation du code PN à 13 Mbits/s est de l'ordre de 80 ns.

Comme précédemment expliqué, il y a une fusion entre la réponse à code brouillé du module à transpondeur avec l'information de distance calculée. Une telle réponse codée peut être intelligemment découplée. Cette seconde action est simplement faite à travers la modulation de la porteuse centrale à retransmettre du module à transpondeur comme montré en figure 6, durant cette seconde étape, qui suit directement l'estimation de distance. La modulation peut être opérée de n'importe quelle façon (fréquence, phase, amplitude, délai de retransmission...). Du côté de la station de base, le traitement numérique DSP utilise la phase PN exacte déterminée dans la seconde étape de manière à dé-convoluer l'onde transverse réponse selon la première variante décrite ou l'onde reflétée réponse selon la seconde variante. Le code PN modulé agit comme un code de brouillage ("scrambling" en terminologie anglaise), qui mène seulement à un désembrouillage correct, lorsque la précédente distance détectée est égale à celle du module à transpondeur elle-même, où la réponse du module à transpondeur a été calculée.

A partir de la description qui vient d'être faite, plusieurs variantes du procédé et système de détermination d'une distance entre une station de base et un objet portable peuvent être conçues par l'homme du métier sans sortir du cadre de l'invention définie par les revendications.

## Revendications

1. Procédé de détermination d'une distance entre au moins un objet portable personnalisé (3) et au moins une station de base (2) par une communication sans fil de signaux, la station de base (2) comprenant un transmetteur (21) de signaux radiofréquences à haute fréquence, un récepteur (22) de signaux radiofréquences à haute fréquence, une unité de traitement (25) et un oscillateur local (23) pour cadencer les opérations de la station de base (2), et l'objet portable (3) comprenant un transmetteur (31) de signaux radiofréquences à haute fréquence, un récepteur (32) de signaux radiofréquences à haute fréquence, une unité logique (35) et un oscillateur local (33) pour cadencer les opérations de l'objet portable (3),
le procédé étant **caractérisé en ce qu'**il comprend les étapes de :
- selon une première étape, activer l'objet portable (3),
- selon une seconde étape, transmettre depuis la station de base (2) un premier signal de synchronisation (Code2), et recevoir le premier signal de synchronisation (Code2) de la station de base (2) dans l'objet portable (3) pour synchroniser une modulation supplémentaire des données propres de l'objet portable (3) dans un signal de réponse subséquent,
- selon une troisième étape, transmettre depuis la station de base (2) un second signal codé (TX3), recevoir le second signal codé (TX3) de la station de base (2) dans l'objet portable (3) et retransmettre le second signal codé reçu (TX3) à la station de base (2), et recevoir le second signal codé (TX3) retransmis de l'objet portable (3) dans la station de base (2) de manière à être converti et mémorisé dans un premier registre mémoire de l'unité de traitement numérique (25),
- selon une quatrième étape, transmettre depuis la station de base (2) un troisième signal codé (PN4), recevoir dans l'objet portable (3) le troisième signal codé (PN4) et retransmettre un signal de réponse brouillé sur la base du troisième signal codé reçu (PN4) et avec une modulation supplémentaire des données propres de l'objet portable (3), et recevoir le signal de réponse brouillé de l'objet portable (3) dans la station de base (2) de manière à être converti et mémorisé dans un second registre mémoire de l'unité de traitement numérique (25),
- selon une cinquième étape, transmettre depuis la station de base à nouveau un troisième signal codé (PN5) de la quatrième étape, recevoir dans l'objet portable (3) ce nouveau troisième signal codé (PN5) et retransmettre un signal de réponse brouillé sur la base du troisième signal codé reçu (PN5) et avec une modulation supplémentaire des données propres de l'objet portable (3), et recevoir le signal réponse de l'objet portable (3) dans la station de base (2) de manière à être converti et mémorisé dans un troisième registre mémoire de l'unité de traitement (25),
- ensuite analyser l'information stockée dans le premier registre mémoire en la corrélant avec un code connu PN dans l'unité de traitement numérique (25) pour déterminer les temps de vol des signaux entre la station de base (2) et l'objet portable (3) et en déduire la distance séparant l'objet portable (3) de la station de base (2),
- analyser l'information stockée dans le second registre mémoire en la dé-corrélant avec le code connu PN de manière à déterminer la réponse transmise dans le signal codé de réponse brouillé, si le code réponse correspond à l'objet portable personnalisé, et
- analyser l'information stockée dans le troisième registre de la mémoire en la dé-corrélant avec le code PN connu, de manière à restaurer la porteuse modulée en fréquence et le signal codé de réponse transmis par l'objet portable (3) lors de la cinquième étape du procédé.

2. Procédé de détermination d'une distance selon la revendication 1, **caractérisé en ce que** l'objet portable (3) est désactivé au terme de la transmission du signal codé de réponse brouillé.

3. Procédé de détermination d'une distance selon la revendication 1, **caractérisé en ce que** le transmetteur (31) de l'objet portable (3) est mis en fonction suite à la réception du premier signal codé de la station de base (2) ou suite à une action d'un porteur de l'objet portable (3) ou suite à une action déterminée, ou selon une synchronisation temporelle établie et synchronisée périodiquement entre le module à transpondeur (3) et la station de base (2).

4. Procédé de détermination d'une distance selon la revendication 1, **caractérisé en ce que** la station de base (2) transmet le premier signal de synchronisation avec un intervalle de temps déterminé après l'activation de l'objet portable (3), ledit premier signal de synchronisation reçu par l'objet portable (3) permettant de préparer le signal de réponse et de mettre en fonction le transmetteur (31) de l'objet portable (3).

5. Procédé de détermination d'une distance selon la revendication 1, **caractérisé en ce que** la station de base (2) transmet successivement le second signal codé et le troisième signal codé, qui sont un second signal à code pseudo-aléatoire de bruit et un troisième signal à code pseudo-aléatoire de bruit.

6. Procédé de détermination d'une distance selon la revendication 1, **caractérisé en ce que** le transmetteur (21) de la station de base (2) transmet successivement un intervalle de temps déterminé après l'activation de l'objet portable (3), le premier signal de synchronisation, suivi par un signal à fréquence porteuse sans code, suivi par le second signal codé, qui est un signal à code pseudo-aléatoire de bruit, suivi par le troisième signal codé, qui est un même signal à code pseudo-aléatoire de bruit, et **en ce que** le récepteur (32) de l'objet portable reçoit successivement le premier signal codé, le signal à fréquence porteuse et les signaux à code pseudo-aléatoire de bruit pour retransmettre ces signaux traités dans l'unité logique (35) à la station de base (2).

7. Procédé de détermination d'une distance selon la revendication 6, **caractérisé en ce que** le signal à fréquence porteuse reçu de la station de base (2) par le récepteur de l'objet portable (3) est retransmis par le transmetteur (31) de l'objet portable pour la station de base (2) de manière à être converti et mémorisé dans un troisième registre mémoire de l'unité de traitement numérique (25).

8. Procédé de détermination d'une distance selon la revendication 7, pour lequel l'oscillateur local (23) de la station de base (2) est un oscillateur à résonateur à quartz (24), et pour lequel l'oscillateur local (33) de l'objet portable (3) est un oscillateur à résonateur à quartz (34) similaire à l'oscillateur à résonateur à quartz (24) de la station de base (2), **caractérisé en ce que** l'information stockée dans le troisième registre mémoire de l'unité de traitement numérique (25) est analysée pour déterminer l'erreur de fréquence entre les deux oscillateurs, afin d'en tenir compte pour la détermination du temps de vol des signaux entre la station de base (2) et l'objet portable (3).

9. Procédé de détermination d'une distance selon la revendication 6, **caractérisé en ce que** le transmetteur (21) de la station de base (2) transmet les signaux à une première haute fréquence à haut débit, et **en ce que** le transmetteur (31) de l'objet portable (3) transmet les signaux à une seconde haute fréquence différente de la première haute fréquence.

10. Procédé de détermination d'une distance selon la revendication 9, **caractérisé en ce que** la première haute fréquence est à une valeur de l'ordre de 2.4 GHz, **en ce que** le haut débit de transmission des signaux du dispositif d'accès ou de déverrouillage (2) est par exemple de l'ordre de 125 Mbits/s, **en ce que** la seconde haute fréquence est à une valeur de l'ordre de 5.8 GHz, et **en ce que** le débit de la modulation supplémentaire dans le signal codé de réponse est par exemple de l'ordre de 50 kbits/s.

11. Procédé de détermination d'une distance selon la revendication 1, **caractérisé en ce que** le transmetteur (21) de la station de base (2) transmet successivement un intervalle de temps déterminé après l'activation de l'objet portable (3), le premier signal de synchronisation, suivi par le second signal codé, qui est un signal à code pseudo-aléatoire de bruit, suivi par le troisième signal codé, qui est par exemple un même signal à code pseudo-aléatoire de bruit, et **en ce que** le récepteur (32) de l'objet portable reçoit successivement le premier signal codé, le signal à fréquence porteuse et les signaux à code pseudo-aléatoire de bruit pour retransmettre ces signaux traités dans l'unité logique (35) à la station de base (2).

12. Procédé de détermination d'une distance selon la revendication 11, **caractérisé en ce que** le transmetteur (21) et le récepteur (22) de la station de base (2), et le transmetteur (31) et le récepteur (32) de l'objet portable (3) transmettent et reçoivent les signaux à une seule haute fréquence par une antenne (26) de la station de base (2) et une antenne (36) de l'objet portable (3).

13. Procédé de détermination d'une distance selon la revendication 12, **caractérisé en ce que** la haute fréquence est à une valeur de l'ordre de 5.8 GHz, **en ce que** le haut débit de transmission des signaux de la station de base (2) est par exemple de l'ordre de 125 Mbits/s, et **en ce que** le débit de la modulation supplémentaire dans le signal codé de réponse est par exemple de l'ordre de 50 kbits/s.

14. Procédé de détermination d'une distance selon la revendication 12, **caractérisé en ce qu'**il est effectué une commutation de transmission et de réception de signaux par l'antenne (26) de la station de base (2) et l'antenne (36) de l'objet portable (3) pour avoir une alternance entre transmission et réception de séquences des signaux transmis et reçus entre la station de base (2) et l'objet portable (3).

15. Procédé de détermination d'une distance selon la revendication 14, **caractérisé en ce que** la durée de transmission de signaux et la durée de réception de signaux de la station de base (2) sont égales, et **en ce que** la durée de transmission de signaux et la durée de réception de signaux de l'objet portable sont égales.

16. Procédé de détermination d'une distance selon la revendication 15, **caractérisé en ce que** la durée de transmission et réception de signaux de la station de base (2) est plus grande que la durée de transmission et réception de signaux de l'objet portable (3), mais inférieure à la durée de chaque phase de transmission ou réception des premier, second et troisième signaux codés.

17. Procédé de détermination d'une distance selon l'une des revendications 6 et 11, **caractérisé en ce que** la transmission et la réception des signaux codés dans la station de base (2) et l'objet portable (3) sont effectuées successivement en continu, **en ce que** la durée de chaque phase de transmission et de réception de signaux est égale dans la station de base (2) et l'objet portable (3).

18. Système (1) de détermination d'une distance pour la mise en œuvre du procédé de détermination d'une distance selon l'une des revendications précédentes, pour lequel le système (1) comprend une station de base (2), et un objet portable personnalisé (3) pour une communication sans fil de signaux avec la station de base (2), la station de base (2) comprenant un transmetteur (21) de signaux radiofréquences à haute fréquence, un récepteur (22) de signaux radiofréquences à haute fréquence, une unité de traitement (25) et un oscillateur local (23) pour cadencer les opérations de la station de base (2), et l'objet portable (3) comprenant un transmetteur (31) de signaux radiofréquences à haute fréquence, un récepteur (32) de signaux radiofréquences à haute fréquence, une unité logique (35) et un oscillateur local (33) pour cadencer les opérations de l'objet portable (3).

19. Système (1) de détermination d'une distance selon la revendication 18, **caractérisé en ce que** l'oscillateur local (23) de la station de base (2) est un oscillateur à résonateur à quartz (24), et pour lequel l'oscillateur local (33) de l'objet portable (3) est un oscillateur à résonateur à quartz (34) similaire à l'oscillateur à résonateur à quartz (24) de la station de base (2).

20. Système (1) de détermination d'une distance selon la revendication 18, **caractérisé en ce que** le transmetteur (21) de la station de base (2) est relié à une première antenne (26) pour la transmission de signaux à une première haute fréquence, **en ce que** le récepteur (22) de la station de base (2) est relié à une seconde antenne (27) pour la réception de signaux à une seconde fréquence, **en ce que** le récepteur (32) de l'objet portable (3) est relié à une première antenne (36) pour la réception de signaux à la première haute fréquence, et **en ce que** le transmetteur (31) de l'objet portable est relié à une seconde antenne (37) pour la transmission de signaux à la seconde haute fréquence.

21. Système (1) de détermination d'une distance selon la revendication 20, **caractérisé en ce que** la première haute fréquence est de l'ordre de 2.4 GHz, et **en ce que** la seconde haute fréquence est de l'ordre de 5.8 GHz.

22. Système (1) de détermination d'une distance selon la revendication 18, **caractérisé en ce que** le transmetteur (21) et le récepteur (22) de la station de base (2) sont reliés par l'intermédiaire d'un élément de commutation (120) sous la forme d'un multiplexeur à une seul antenne (26) pour la transmission et la réception de signaux à une haute fréquence, et **en ce que** le transmetteur (31) et le récepteur (32) sont reliés par l'intermédiaire d'un élément de commutation (150) sous la forme d'un multiplexeur à une seul antenne (36) pour la transmission et la réception de signaux à la même haute fréquence.

23. Système (1) de détermination d'une distance selon la revendication 22, **caractérisé en ce que** la haute fréquence est de l'ordre de 5.8 GHz.

24. Système (1) de détermination d'une distance selon la revendication 18, **caractérisé en ce que** la station de base (2) est disposée sur une zone d'activité, et **en ce que** l'objet portable (3) est un module à transpondeur susceptible d'être porté par une personne dans la zone d'activité, le module à transpondeur pouvant être activé par l'action manuelle sur un bouton ou une touche du module, ou activée par un signal de réveil à basse fréquence transmis par la station de base (2) ou encore activé périodiquement sur la base d'un intervalle défini et synchronisé entre la station de base (2) et le module à transpondeur (3).

## Patentansprüche

1. Verfahren zum Bestimmen einer Entfernung zwischen mindestens einem personalisierten tragbaren Objekt (3) und mindestens einer Basisstation (2) über eine drahtlose Kommunikation von Signalen, wobei die Basisstation (2) einen Sender (21) für Hochfrequenz-Funksignale, einen Empfänger (22) für Hochfrequenz-Funksignale, eine Verarbeitungseinheit (25) und einen lokalen Oszillator (23) zum Takten der Operationen der Basisstation (2) umfasst, und wobei das tragbare Objekt (3) einen Sender (31) für Hochfrequenz-Funksignale, einen Empfänger (32) für Hochfrequenz-Funksignale, eine Logikeinheit (35) und einen lokalen Oszillator (33) zum Takten der Operationen des tragbaren Objekts (3) umfasst,
wobei das Verfahren **dadurch gekennzeichnet ist, dass** es die folgenden Schritte umfasst:
- in einem ersten Schritt, Aktivieren des tragbaren Objekts (3),
- in einem zweiten Schritt, Übertragen eines ersten Synchronisationssignals (Code2) von der Basisstation (2), und Empfangen des ersten Synchronisationssignals (Code2) der Basisstation (2) im tragbaren Objekt (3), um eine zusätzliche Modulation der eigenen Daten des tragbaren Objekts (3) in einem anschließenden Antwortsignal zu synchronisieren,
- in einem dritten Schritt, Übertragen eines zweiten codierten Signals (TX3) von der Basisstation (2), Empfangen des zweiten codierten Signals (TX3) der Basisstation (2) im tragbaren Objekt (3), und Zurücksenden des empfangenen zweiten codierten Signals (TX3) an die Basisstation (2), und Empfangen des zurückgesendeten codierten zweiten Signals (TX3) des tragbaren Objekts (3) in der Basisstation (2), sodass es umgewandelt und in einem ersten Speicherregister der digitalen Verarbeitungseinheit (25) gespeichert werden kann,
- in einem vierten Schritt, Übertragen eines dritten codierten Signals (PN4) von der Basisstation (2), Empfangen des dritten codierten Signals (PN4) im tragbaren Objekt (3), und Zurücksenden eines verwürfelten Antwortsignals auf Basis des empfangenen dritten codierten Signals (PN4) und mit einer zusätzlichen Modulation der eigenen Daten des tragbaren Objekts (3), und Empfangen des verwürfelten Antwortsignals des tragbaren Objekts (3) in der Basisstation (2), sodass es umgewandelt und in einem zweiten Speicherregister der digitalen Verarbeitungseinheit (25) gespeichert werden kann,
- in einem fünften Schritt, erneutes Übertragen eines dritten codierten Signals (PN5) aus dem vierten Schritt von der Basisstation, Empfangen dieses neuen dritten codierten Signals (PN5) im tragbaren Objekt (3), und Zurücksenden eines verwürfelten Antwortsignals auf Basis des empfangenen dritten codierten Signals (PN5) und mit einer zusätzlichen Modulation der eigenen Daten des tragbaren Objekts (3), und Empfangen des Antwortsignals des tragbaren Objekts (3) in der Basisstation (2), sodass es umgewandelt und in einem dritten Speicherregister der Verarbeitungseinheit (25) gespeichert werden kann,
- anschließend Analysieren der im ersten Speicherregister gespeicherten Informationen, indem diese mit einem bekannten PN-Code in der digitalen Verarbeitungseinheit (25) korreliert werden, um die Laufzeiten der Signale zwischen der Basisstation (2) und dem tragbaren Objekt (3) zu bestimmen und daraus die Entfernung abzuleiten, die das tragbare Objekt (3) von der Basisstation (2) trennt,
- Analysieren der im zweiten Speicherregister gespeicherten Informationen, indem diese mit dem bekannten PN-Code dekorreliert werden, um die im verwürfelten codierten Antwortsignal übertragene Antwort zu bestimmen, wenn der Antwortcode dem personalisierten tragbaren Objekt entspricht, und
- Analysieren der im dritten Register des Speichers gespeicherten Informationen, indem diese mit dem bekannten PN-Code dekorreliert werden, um den frequenzmodulierten Träger und das vom tragbaren Objekt (3) beim fünften Schritt des Verfahrens übertragene codierte Antwortsignal wiederherzustellen.

2. Verfahren zum Bestimmen einer Entfernung nach Anspruch 1, **dadurch gekennzeichnet, dass** das tragbare Objekt (3) am Ende der Übertragung des verwürfelten codierten Antwortsignals deaktiviert wird.

3. Verfahren zum Bestimmen einer Entfernung nach Anspruch 1, **dadurch gekennzeichnet, dass** der Sender (31) des tragbaren Objekts (3) im Anschluss an den Empfang des ersten codierten Signals der Basisstation (2), oder im Anschluss an eine Aktion eines Trägers des tragbaren Objekts (3), oder im Anschluss an eine bestimmte Aktion, oder gemäß einer zwischen dem Transpondermodul (3) und der Basisstation (2) hergestellten und periodisch synchronisierten Zeitsynchronisation eingeschaltet wird.

4. Verfahren zum Bestimmen einer Entfernung nach Anspruch 1, **dadurch gekennzeichnet, dass** die Basisstation (2) das erste Synchronisationssignal mit einem bestimmten Zeitintervall nach der Aktivierung des tragbaren Objekts (3) überträgt, wobei es das vom tragbaren Objekt (3) empfangene erste Synchronisationssignal ermöglicht, das Antwortsignal vorzubereiten und den Sender (31) des tragbaren Objekts (3) einzuschalten.

5. Verfahren zum Bestimmen einer Entfernung nach Anspruch 1, **dadurch gekennzeichnet, dass** die Basisstation (2) nacheinander das zweite codierte Signal und das dritte codierte Signal überträgt, bei denen es sich um ein zweites Pseudozufallsrauschcodesignal und ein drittes Pseudozufallsrauschcodesignal handelt.

6. Verfahren zum Bestimmen einer Entfernung nach Anspruch 1, **dadurch gekennzeichnet, dass** der Sender (21) der Basisstation (2) nacheinander ein bestimmtes Zeitintervall nach der Aktivierung des tragbaren Objekts (3), das erste Synchronisationssignal, gefolgt von einem Trägerfrequenzsignal ohne Code, gefolgt vom zweiten codierten Signal, bei dem es sich um ein Pseudozufallsrauschcodesignal handelt, gefolgt vom dritten codierten Signal, bei dem es sich um das gleiche Pseudozufallsrauschcodesignal handelt, überträgt, und dadurch, dass der Empfänger (32) des tragbaren Objekts nacheinander das erste codierte Signal, das Trägerfrequenzsignal und die Pseudozufallsrauschcodesignale empfängt, um diese in der Logikeinheit (35) verarbeiteten Signale an die Basisstation (2) zurückzusenden.

7. Verfahren zum Bestimmen einer Entfernung nach Anspruch 6, **dadurch gekennzeichnet, dass** das vom Empfänger des tragbaren Objekts (3) von der Basisstation (2) empfangene Trägerfrequenzsignal vom Sender (31) des tragbaren Objekts an die Basisstation (2) zurückgesendet wird, sodass es umgewandelt und in einem dritten Speicherregister der digitalen Verarbeitungseinheit (25) gespeichert werden kann.

8. Verfahren zum Bestimmen einer Entfernung nach Anspruch 7, wobei es sich beim lokalen Oszillator (23) der Basisstation (2) um einen Quarzresonator-Oszillator (24) handelt, und wobei es sich beim lokalen Oszillator (33) des tragbaren Objekts (3) um einen Quarzresonator-Oszillator (34) ähnlich dem Quarzresonator-Oszillator (24) der Basisstation (2) handelt, **dadurch gekennzeichnet, dass** die im dritten Speicherregister der digitalen Verarbeitungseinheit (25) gespeicherten Informationen analysiert werden, um den Frequenzfehler zwischen den zwei Oszillatoren zu bestimmen, um ihn bei der Bestimmung der Laufzeit der Signale zwischen der Basisstation (2) und dem tragbaren Objekt (3) zu berücksichtigen.

9. Verfahren zum Bestimmen einer Entfernung nach Anspruch 6, **dadurch gekennzeichnet, dass** der Sender (21) der Basisstation (2) die Signale mit einer ersten Hochfrequenz mit hoher Rate überträgt, und dadurch, dass der Sender (31) des tragbaren Objekts (3) die Signale mit einer zweiten Hochfrequenz überträgt, die sich von der ersten Hochfrequenz unterscheidet.

10. Verfahren zum Bestimmen einer Entfernung nach Anspruch 9, **dadurch gekennzeichnet, dass** die erste Hochfrequenz bei einem Wert im Bereich von 2,4 GHz liegt, dadurch, dass die hohe Signalübertragungsrate der Zugriffs- oder Entsperrvorrichtung (2) zum Beispiel im Bereich von 125 Mbits/s liegt, dadurch, dass die zweite Hochfrequenz bei einem Wert im Bereich von 5,8 GHz liegt, und dadurch, dass die Rate der zusätzlichen Modulation im codierten Antwortsignal zum Beispiel im Bereich von 50 kbits/s liegt.

11. Verfahren zum Bestimmen einer Entfernung nach Anspruch 1, **dadurch gekennzeichnet, dass** der Sender (21) der Basisstation (2) nacheinander ein bestimmtes Zeitintervall nach der Aktivierung des tragbaren Objekts (3), das erste Synchronisationssignal, gefolgt vom zweiten codierten Signal, bei dem es sich um ein Pseudozufallsrauschcodesignal handelt, gefolgt vom dritten codierten Signal, bei dem es sich zum Beispiel um das gleiche Pseudozufallsrauschcodesignal handelt, überträgt, und dadurch, dass der Empfänger (32) des tragbaren Objekts nacheinander das erste codierte Signal, das Trägerfrequenzsignal und die Pseudozufallsrauschcodesignale empfängt, um diese in der Logikeinheit (35) verarbeiteten Signale an die Basisstation (2) zurückzusenden.

12. Verfahren zum Bestimmen einer Entfernung nach Anspruch 11, **dadurch gekennzeichnet, dass** der Sender (21) und der Empfänger (22) der Basisstation (2), und der Sender (31) und der Empfänger (32) des tragbaren Objekts (3) die Signale mit einer einzigen Hochfrequenz über eine Antenne (26) der Basisstation (2) und eine Antenne (36) des tragbaren Objekts (3) übertragen und empfangen.

13. Verfahren zum Bestimmen einer Entfernung nach Anspruch 12, **dadurch gekennzeichnet, dass** die Hochfrequenz bei einem Wert im Bereich von 5,8 GHz liegt, dadurch, dass die hohe Signalübertragungsrate der Basisstation (2) zum Beispiel im Bereich von 125 Mbits/s liegt, und dadurch, dass die Rate der zusätzlichen Modulation im codierten Antwortsignal zum Beispiel im Bereich von 50 kbits/s liegt.

14. Verfahren zum Bestimmen einer Entfernung nach Anspruch 12, **dadurch gekennzeichnet, dass** eine Umschaltung von Signalübertragung und -empfang durch die Antenne (26) der Basisstation (2) und die Antenne (36) des tragbaren Objekts (3) erfolgt, um über einen Wechsel zwischen Übertragung und Empfang von Sequenzen der Signale, die zwischen der Basisstation (2) und dem tragbaren Objekt (3) übertragen und empfangen werden, zu verfügen.

15. Verfahren zum Bestimmen einer Entfernung nach Anspruch 14, **dadurch gekennzeichnet, dass** die Signalübertragungsdauer und die Signalempfangsdauer der Basisstation (2) gleich sind, und dadurch, dass die Signalübertragungsdauer und die Signalempfangsdauer des tragbaren Objekts gleich sind.

16. Verfahren zum Bestimmen einer Entfernung nach Anspruch 15, **dadurch gekennzeichnet, dass** die Signalübertragungs- und Empfangsdauer der Basisstation (2) größer ist als die Signalübertragungs- und Empfangsdauer des tragbaren Objekts (3), aber kleiner als die Dauer jeder Übertragungs- oder Empfangsphase des ersten, zweiten und dritten codierten Signals.

17. Verfahren zum Bestimmen einer Entfernung nach einem der Ansprüche 6 und 11, **dadurch gekennzeichnet, dass** die Übertragung und der Empfang der codierten Signale in der Basisstation (2) und dem tragbaren Objekt (3) kontinuierlich nacheinander erfolgen, dadurch, dass die Dauer jeder Signalübertragungs- und Empfangsphase in der Basisstation (2) und dem tragbaren Objekt (3) gleich ist.

18. System (1) zum Bestimmen einer Entfernung zur Umsetzung des Verfahrens zum Bestimmen einer Entfernung nach einem der vorstehenden Ansprüche, wobei das System (1) eine Basisstation (2) und ein personalisiertes tragbares Objekt (3) für eine drahtlose Signalkommunikation mit der Basisstation (2) umfasst, wobei die Basisstation (2) einen Sender (21) für Hochfrequenz-Funksignale, einen Empfänger (22) für Hochfrequenz-Funksignale, eine Verarbeitungseinheit (25) und einen lokalen Oszillator (23) zum Takten der Operationen der Basisstation (2) umfasst, und wobei das tragbare Objekt (3) einen Sender (31) für Hochfrequenz-Funksignale, einen Empfänger (32) für Hochfrequenz-Funksignale, eine Logikeinheit (35) und einen lokalen Oszillator (33) zum Takten der Operationen des tragbaren Objekts (3) umfasst.

19. System (1) zum Bestimmen einer Entfernung nach Anspruch 18, **dadurch gekennzeichnet, dass** es sich beim lokalen Oszillator (23) der Basisstation (2) um einen Quarzresonator-Oszillator (24) handelt, und wobei es sich beim lokalen Oszillator (33) des tragbaren Objekts (3) um einen Quarzresonator-Oszillator (34) ähnlich dem Quarzresonator-Oszillator (24) der Basisstation (2) handelt.

20. System (1) zum Bestimmen einer Entfernung nach Anspruch 18, **dadurch gekennzeichnet, dass** der Sender (21) der Basisstation (2) an eine erste Antenne (26) für die Übertragung von Signalen mit einer ersten Hochfrequenz angeschlossen ist, dadurch, dass der Empfänger (22) der Basisstation (2) an eine zweite Antenne (27) für den Empfang von Signalen mit einer zweiten Frequenz angeschlossen ist, dadurch, dass der Empfänger (32) des tragbaren Objekts (3) an eine erste Antenne (36) für den Empfang von Signalen mit der ersten Hochfrequenz angeschlossen ist, und dadurch, dass der Sender (31) des tragbaren Objekts an eine zweite Antenne (37) für die Übertragung von Signalen mit der zweiten Hochfrequenz angeschlossen ist.

21. System (1) zum Bestimmen einer Entfernung nach Anspruch 20, **dadurch gekennzeichnet, dass** die erste Hochfrequenz im Bereich von 2,4 GHz liegt, und dadurch, dass die zweite Hochfrequenz im Bereich von 5,8 GHz liegt.

22. System (1) zum Bestimmen einer Entfernung nach Anspruch 18, **dadurch gekennzeichnet, dass** der Sender (21) und der Empfänger (22) der Basisstation (2) mittels eines Schaltelements (120) in Form eines Multiplexers an eine einzige Antenne (26) für die Übertragung und den Empfang von Signalen mit einer hohen Frequenz angeschlossen sind, und dadurch, dass der Sender (31) und der Empfänger (32) mittels eines Schaltelements (150) in Form eines Multiplexers an eine einzige Antenne (36) für die Übertragung und den Empfang von Signalen mit der gleichen Hochfrequenz angeschlossen sind.

23. System (1) zum Bestimmen einer Entfernung nach Anspruch 22, **dadurch gekennzeichnet, dass** die Hochfrequenz im Bereich von 5,8 GHz liegt.

24. System (1) zum Bestimmen einer Entfernung nach Anspruch 18, **dadurch gekennzeichnet, dass** die Basisstation (2) an einem Aktivitätsbereich angeordnet ist, und dadurch, dass es sich beim tragbaren Objekt (3) um ein Transpondermodul handelt, das von einer Person im Aktivitätsbereich getragen werden kann, wobei das Transpondermodul durch die manuelle Betätigung eines Knopfes oder einer Taste des Moduls aktiviert werden kann, oder durch ein von der Basisstation (2) übertragenes Niederfrequenz-Aufwecksignal aktiviert werden kann, oder auch periodisch auf Basis eines definierten und zwischen der Basisstation (2) und dem Transpondermodul (3) synchronisierten Intervalls aktiviert werden kann.

## Claims

1. Process for determining a distance between at least one personalised wearable object (3) and at least one base station (2) by a wireless signal communication, the base station (2) comprising a transmitter (21) of radiofrequency signals at high frequency, a receiver (22) of radiofrequency signals at high frequency, a processing unit (25) and a local oscillator (23) for clocking the operations of the base station (2), and the wearable object (3) comprising a transmitter (31) of radiofrequency signals at high frequency, a receiver (32) of radiofrequency signals at high frequency, a logic unit (35) and a local oscillator (33) for clocking the operations of the wearable object (3),
the process being **characterised in that** it comprises the steps of:
- according to a first step, activating the wearable object (3),
- according to a second step, transmitting a first synchronisation signal (Code2) from the base station (2), and receiving the first synchronisation signal (Code2) from the base station (2) in the wearable object (3) to synchronise an additional modulation of the data particular to the wearable object (3) in a subsequent response signal,
- according to a third step, transmitting a second coded signal (TX3) from the base station (2), receiving the second coded signal (TX3) from the base station (2) in the wearable object (3) and retransmitting the received second coded signal (TX3) to the base station (2), and receiving the retransmitted second coded signal (TX3) from the wearable object (3) in the base station (2) in order to be converted and stored in a first memory register of the digital processing unit (25),
- according to a fourth step, transmitting a third coded signal (PN4) from the base station (2), receiving in the wearable object (3) the third coded signal (PN4) and retransmitting a scrambled response signal on the basis of the third coded signal (PN4) received and with an additional modulation of the data particular to the wearable object (3), and receiving the scrambled response signal from the wearable object (3) in the base station (2) in order to be converted and stored in a second memory register of the digital processing unit (25),
- according to a fifth step, transmitting again a third coded signal (PN5) of the fourth step from the base station, receiving in the wearable object (3) this new third coded signal (PN5) and retransmitting a scrambled response signal on the basis of the third coded signal (PN5) received and with an additional modulation of the data particular to the wearable object (3), and receiving the response signal from the wearable object (3) in the base station (2) in order to be converted and stored in a third memory register of the processing unit (25),
- then analysing the information stored in the first memory register by correlating it with a known PN code in the digital processing unit (25) to determine the flight times of the signals between the base station (2) and the wearable object (3) and deducing therefrom the distance separating the wearable object (3) and the base station (2),
- analysing the information stored in the second memory register by de-correlating it with the known PN code in order to determine the response transmitted in the scrambled coded response signal, if the response code corresponds to the personalised wearable object, and
- analysing the information stored in the third memory register by de-correlating it with the known PN code, in order to restore the frequency modulated carrier and the coded response signal transmitted by the wearable object (3) during the fifth step of the process.

2. Process for determining a distance according to claim 1, **characterised in that** the wearable object (3) is deactivated at the end of the transmission of the scrambled coded response signal.

3. Process for determining a distance according to claim 1, **characterised in that** the transmitter (31) of the wearable object (3) is set in operation following the reception of the first coded signal from the base station (2) or following an action of a wearer of the wearable object (3) or following a determined action, or according to a time synchronisation established and synchronised periodically between the transponder module (3) and the base station (2).

4. Process for determining a distance according to claim 1, **characterised in that** the base station (2) transmits the first synchronisation signal with a determined time interval after the activation of the wearable object (3), said first synchronisation signal received by the wearable object (3) allowing the response signal to be prepared and the transmitter (31) of the wearable object (3) to be set in operation.

5. Process for determining a distance according to claim 1, **characterised in that** the base station (2) transmits in succession the second coded signal and the third coded signal, which are a second pseudo-random noise code signal and a third pseudo-random noise code signal.

6. Process for determining a distance according to claim 1, **characterised in that** the transmitter (21) of the base station (2) transmits in succession a determined time interval after activation of the wearable object (3), the first synchronisation signal, followed by a codeless carrier frequency signal, followed by the second coded signal, which is a pseudo-random noise code signal, followed by the third coded signal, which is a same pseudo-random noise code signal, and **in that** the receiver (32) of the wearable object receives in succession the first coded signal, the carrier frequency signal and the pseudo-random noise code signals to retransmit these signals processed in the logic unit (35) to the base station (2).

7. Process for determining a distance according to claim 6, **characterised in that** the carrier frequency signal received from the base station (2) by the receiver of the wearable object (3) is retransmitted by the transmitter (31) of the wearable object for the base station (2) in order to be converted and stored in a third memory register of the digital processing unit (25).

8. Process for determining a distance according to claim 7, for which the local oscillator (23) of the base station (2) is an oscillator with a quartz resonator (24) and for which the local oscillator (33) of the wearable object (3) is an oscillator with quartz resonator (34) similar to the oscillator with the quartz resonator (24) of the base station (2), **characterised in that** the information stored in the third memory register of the digital processing unit (25) is analysed to determine the frequency error between the two oscillators to be taken into account for determination of the flight time of the signals between the base station (2) and the wearable object (3).

9. Process for determining a distance according to claim 6, **characterised in that** the transmitter (21) of the base station (2) transmits the signals at a first high frequency at a high transfer rate, and **in that** the transmitter (31) of the wearable object (3) transmits the signals at a second high frequency different from the first high frequency.

10. Process for determining a distance according to claim 9, **characterised in that** the first high frequency is at a value in the order of 2.4 GHz, **in that** the high transfer rate of the signals of the base station (2) is in the order of 125 Mbits/s, for example, **in that** the second high frequency is at a value in the order of 5.8 GHz, **in that** the rate of the additional modulation in the coded response signal is in the order of 50 kbits/s, for example.

11. Process for determining a distance according to claim 1, **characterised in that** the transmitter (21) of the base station (2) transmits in succession a determined time interval after activation of the wearable object (3), the first synchronisation signal followed by the second coded signal, which is a pseudo-random noise code signal, followed by the third coded signal, which is a same pseudo-random noise code signal, followed by the third coded signal, which is for example a same pseudo-random noise code signal, and **in that** the receiver (32) of the wearable object receives in succession the first coded signal, the carrier frequency signal and the pseudo-random noise code signals to retransmit these signals processed in the logic unit (35) to the base station (2).

12. Process for determining a distance according to claim 11, **characterised in that** transmitter (21) and the receiver (22) of the base station (2), and the transmitter (31) and the receiver (32) of the wearable object (3) transmit and receive the signals at a single high frequency through an antenna (26) of the base station (2) and an antenna (36) of the wearable object (3).

13. Process for determining a distance according to claim 12, **characterised in that** the high frequency is at a value in the order of 5.8 GHz, **in that** the high transfer rate of the signals from the base station (2) is in the order of 125 Mbits/s, for example, and **in that** the rate of the additional modulation in the coded response signal is in the order of 50 kbits/s, for example.

14. Process for determining a distance according to claim 12, **characterised in that** a switchover of transmission and reception of signals through the antenna (26) of the base station (2) and the antenna (36) of the wearable object (3) is conducted to have an alternation between transmission and reception of sequences of the signals transmitted and received between the base station (2) and the wearable object (3).

15. Process for determining a distance according to claim 14, **characterised in that** the duration of transmission of signals and the duration of reception of signals from the base station (2) are equal, and **in that** the duration of transmission of signals and the duration of reception of signals from the wearable object are equal.

16. Process for determining a distance according to claim 15, **characterised in that** the duration of transmission and reception of signals from the base station (2) is more than the duration of transmission and reception of signals from the wearable object (3), but less than the duration of each phase of transmission or reception of the first, second and third coded signals.

17. Process for determining a distance according to one of claims 6 to 11, **characterised in that** the transmission and reception of the coded signals in the base station (2) and the wearable object (2) are conducted continuously in succession, **in that** the duration of each phase of transmission and reception of signals is equal in the base station (2) and the wearable object (3).

18. System (1) for determining a distance for implementation of the process for determining a distance according to one of the preceding claims, for which the system (1) comprises a base station (2) and a personalised wearable object (3) for a wireless signal communication with the base station (2), the base station (2) comprising a transmitter (21) of radiofrequency signals at high frequency, a receiver (22) of radiofrequency signals at high frequency, a processing unit (25) and a local oscillator (23) for clocking the operations of the base station (2), and the wearable object (3) comprising a transmitter (31) of radiofrequency signals at high frequency, a receiver (32) of radiofrequency signals at high frequency, a logic unit (35) and a local oscillator (33) for clocking the operations of the wearable object (3).

19. System (1) for determining a distance according to claim 18, **characterised in that** the local oscillator (23) of the base station (2) is an oscillator with a quartz resonator (24), and for which the local oscillator (33) of the wearable object (3) is an oscillator with a quartz resonator (34) similar to the oscillator with the quartz resonator (24) of the base station (2).

20. System (1) for determining a distance according to claim 18, **characterised in that** the transmitter (21) of the base station (2) is connected to a first antenna (26) for the transmission of signals at a first high frequency, **in that** the receiver (22) of the base station (2) is connected to a second antenna (27) for the reception of signals at a second frequency, **in that** the receiver (32) of the wearable object (3) is connected to a first antenna (36) for the reception of signals at a first high frequency, and **in that** the transmitter (31) of the wearable object is connected to a second antenna (37) for the transmission of signals at the second high frequency.

21. System (1) for determining a distance according to claim 20, **characterised in that** the first high frequency is in the order of 2.4 GHz, and **in that** the second high frequency is in the order of 5.8 GHz.

22. System (1) for determining a distance according to claim 18, **characterised in that** the transmitter (21) and the receiver (22) of the base station (2) are connected by means of a switching element (120) in the form of a multiplexer with a single antenna (26) for the transmission and reception of signals at a high frequency, and **in that** the transmitter (31) and the receiver (32) are connected by means of a switching element (150) in the form of a multiplexer with a single antenna (36) for the transmission and reception of signals at the same high frequency.

23. System (1) for determining a distance according to claim 22, **characterised in that** the high frequency is in the order of 5.8 GHz.

24. System (1) for determining a distance according to claim 18, **characterised in that** the base station (2) is arranged on a zone of activity, and **in that** the wearable object (3) is a transponder module capable of being worn by a person in the zone of activity, the transponder module being able to be activated by manually acting on a button or a touch of the module, or activated by a low-frequency wake-up signal transmitted by the base station (2) or else activated periodically on the basis of a defined and synchronised interval between the base station (2) and the transponder module (3).
